Europäisches Patentamt

European Patent Office

Office européen des brevets

(11) Veröffentlichungsnummer: **0 294 569**
**A2**

(12) **EUROPÄISCHE PATENTANMELDUNG**

(21) Anmeldenummer: 88106377.0

(22) Anmeldetag: 21.04.88

(51) Int. Cl.4: **C13D 3/02**

(30) Priorität: 16.05.87 DE 3716448

(43) Veröffentlichungstag der Anmeldung:
14.12.88 Patentblatt 88/50

(84) Benannte Vertragsstaaten:
**AT BE FR GB IT NL**

(71) Anmelder: **Fried. Krupp Gesellschaft mit beschränkter Haftung**
**Altendorfer Strasse 103**
**D-4300 Essen 1(DE)**

(72) Erfinder: **Müller, Hans-Joachim**
**Goethestrasse 95**
**D-4048 Grevenbroich(DE)**
Erfinder: **Niestroj, Joachim Siegfried**
**Eggershover Gasse 24**
**D-4049 Rommerskirchen(DE)**

(54) **Kalkmilchzuteiler.**

(57) Die Erfindung betrifft eine Vorrichtung zum dosierten Zugeben von Kalkmilch für die Saftreinigung, insbesondere bei der Zuckerherstellung, abhängig von der zu behandelnden Saftmenge oder dem pH-Wert mit drei Kammern und einem Dosierschieber, der einen im wesentlichen konstanten Kalkmilchstrom in einen Ablauf zur Saftreinigung und einen Rücklauf zur Behälter-Pumpe aufteilt und die bei Störungen oder beim Abschalten selbsttätig leerläuft.

EP 0 294 569 A2

## Kalkmilchzuteiler

Die Erfindung betrifft eine Vorrichtung zum dosierten Zugeben von Kalkmilch für die Saftreinigung, insbesondere bei der Zuckerherstellung, abhängig von der zu behandelnden Saftmenge oder deren pH-Wert.

Sowohl in Rübenzuckerfabriken als auch in Rohrzuckerfabriken wird Kalkmilch zur Saftreinigung verwendet. Die zugeführte Kalkmilchmenge wird entweder proportional zur zu behandelnden Saftmenge oder abhängig vom pH-Wert des Saftes geregelt. Für die Zuführung proportional zur Saftmenge werden seit langem Kalkmilchschöpfwerke eingesetzt. Hierbei handelt es sich um die Kombination einer vom Rohsaft angetriebenen Drehkolbenpumpe, welche entsprechend dem Rohsaftdurchsatz ein Regelgetriebe antreibt, von dem ein sogenanntes Kalkmilchschöpfwerk proportional dem Rohsaftstrom betrieben wird. Eine Alternative dazu ist eine herkömmliche Mengenmessung des Rohsaftstromes, zu welchem proportional die Drehzahl des Schöpfwerkes eingestellt wird.

Die bis dato gebauten Schöpfwerke haben unter anderem den Nachteil, daß es wegen der zu geringen Strömungsgeschwindigkeit in den Behältern dieser Schöpfwerke zu Sedimentationen kommt.

Auch bei anderen Lösungsvorschlägen mit Hochbehältern und Regelorganen ergeben sich ein relativ großer apparativer Aufwand und die Gefahr von Verstopfungen, Anbackungen und Sedimentation der Kalkmilch in unzugänglichen Bereichen sowie teilweise schlechte Regelbarkeit.

Die hohe Störanfälligkeit herkömmlicher Zuteiler ist dadurch bedingt, daß die Kalkmilch mit hohen Sandanteilen beladen ist, die abrassiv sind und schnell dekantieren.

Der Erfindung liegt die Aufgabe zugrunde, eine Vorrichtung zum dosierten Zugeben von Kalkmilch für die Saftreinigung, insbesondere bei der Zuckerherstellung, abhängig von der zu behandelnden Saftmenge oder dem pH-Wert anzugeben, mit deren Hilfe das dosierte Zugeben von Kalkmilch mit geringem konstruktiven Aufwand in den geforderten Grenzen möglich ist und Störungen durch Anbackungen und Sedimentation sicher vermieden wird.

Diese Aufgabe wird erfindungsgemäß durch eine Vorrichtung gelöst, bei der der Innenraum in drei Kammern mit je einem Zu- bzw. Ablauf unterteilt ist, von denen eine als Zulaufkammer eine als Ablaufkammer und eine zwischen diesen beiden liegende als Rücklaufkammer dient, wobei ein Teil der Trennwand zwischen der Zulaufkammer und der Rücklaufkammer eine Überlaufkante bildet, die Oberkante der Trennwand zwischen der Rücklaufkammer und der Ablaufkammer niedriger liegt als die Überlaufkante, ein Dosierschieber relativ zur Überlaufkante beweglich derart angeordnet ist, daß er je nach seiner Stellung den über die Überlaufkante tretenden Kalkmilchzulaufstrom ganz oder teilweise in die Ablaufkammer oder teilweise oder ganz in die Rücklaufkammer leitet und daß die Zulaufkammer zusätzlich über eine oder mehrere Bohrungen mit der Rücklaufkammer in Verbindung steht.

Über eine Zulaufleitung wird dem Kalkmilchzuteiler ein konstanter Kalkmilchstrom zugeführt, der die Zulaufkammer bis zur Höhe der Überlaufkante füllt. Die Kalkmilch fließt über diese Überlaufkante in der einen Extremstellung des Dosierschiebers insgesamt in die Rücklaufkammer und von dort zur Behälter-Pumpe zurück, oder in der anderen Extremstellung des Dosierschiebers insgesamt in die Ablaufkammer und von dort in die Saftreinigung. In jeder Zwischenstellung wird der Kalkmilchstrom geteilt, das heißt ein Teil wird dem Prozeß zugeführt und der überschüssige Teil zurückgeführt. Die Positionierung des Dosierschiebers erfolgt durch einen Stellantrieb abhängig vom Saftstrom oder dem pH-Wert stufenlos. Die Kalkmilch läuft somit in stetigem Strom über die Überlaufkante in den Ablauf bzw. den Rücklauf, wodurch eine ständige Rezirkulation gewährleistet ist. Betriebsschwankungen verändern lediglich die Größe des überlaufenden Mengenstromes bzw. seine Verteilung.

Weitere Vorteile sind die Verringerung des Verschleißes auf ein Minimum, da der Kalkmilchzuteiler über lediglich ein bewegliches Teil verfügt und die platzsparende Bauweise, so daß er ohne Schwierigkeiten an der für die Saftreinigung gewünschten Stelle angeordnet werden kann.

Die Kammern des Kalkmilchzuteilers sind im Bereich der Flüssigkeit konisch, was in Verbindung mit dem einfachen Aufbau des Kalkmilchzuteilers einen jegliche Sedimentation ausschließenden sicheren und störungsfreien Betrieb gewährleistet. Dekantate werden zuverlässig abgeleitet und können sich nicht aufbauen. In der Zulaufkammer werden sie immer in Bewegung gehalten und, da der Eintritt von unten erfolgt, aufgeschwemmt und über den Überlauf weggespült.

In einer weiteren Ausgestaltung des Kalkmilchzuteilers ist der Dosierschieber zwischen der Zulaufkammer und der Ablaufkammer über der Rücklaufkammer diese überbrückend angeordnet. Der Vorteil dieser Anordnung besteht in einer Dosierung mit geradem Bewegungsverlauf ohne Umlenkungen oder Übersetzungen, wodurch kostengünstige Stellantriebe herkömmlicher Bauart verwendet werden können.

Dadurch, daß bei einer besonderen Ausgestaltung des Kalkmilchzuteilers sowohl der Zulauf, der Ablauf als auch der Rücklauf an der unteren Seite angeordnet sind, ergibt sich, daß die Kalkmilch aus der Rücklaufkammer und der Ablaufkammer selbsttätig abfließt, das heißt, die Kammern beim Abschalten der Anlage oder im Falle einer Störung automatisch leerlaufen. Es wird dadurch eine Sedimentation oder ein Verstopfen sicher vermieden. Das gleiche gilt für die Zulaufkammer, sie läuft leer über eine oder mehrere Bohrungen an der tiefsten Stelle, über die die Kalkmilch in den Rücklauf abfließt. Dadurch, daß während des gesamten Betriebes ein kleiner Kalkmilchstrom durch diese Bohrungen fließt, wird erreicht, daß sie sich nicht zusetzen können und es auch in der Zulaufkammer zu keinerlei Ablagerungen kommen kann.

Eine besonders einfache und sichere Konstruktion ergibt sich bei einer vorteilhaften Ausgestaltung des Kalkmilchzuteilers dadurch, daß der Dosierschieber unter die Überlaufkante greift und den für das Verfahren benötigten Kalkmilchanteil über eine geneigte Leitfläche in die Ablaufkammer leitet. Durch diese Maßnahme sind Dichtungsflächen irgendwelcher Art überflüssig und es kann auch am Dosierschieber selbst nicht zu störenden Ablagerungen und/oder Anbackungen kommen, da jegliche Toträume vermieden sind und die Kalkmilch jederzeit restlos abfließt.

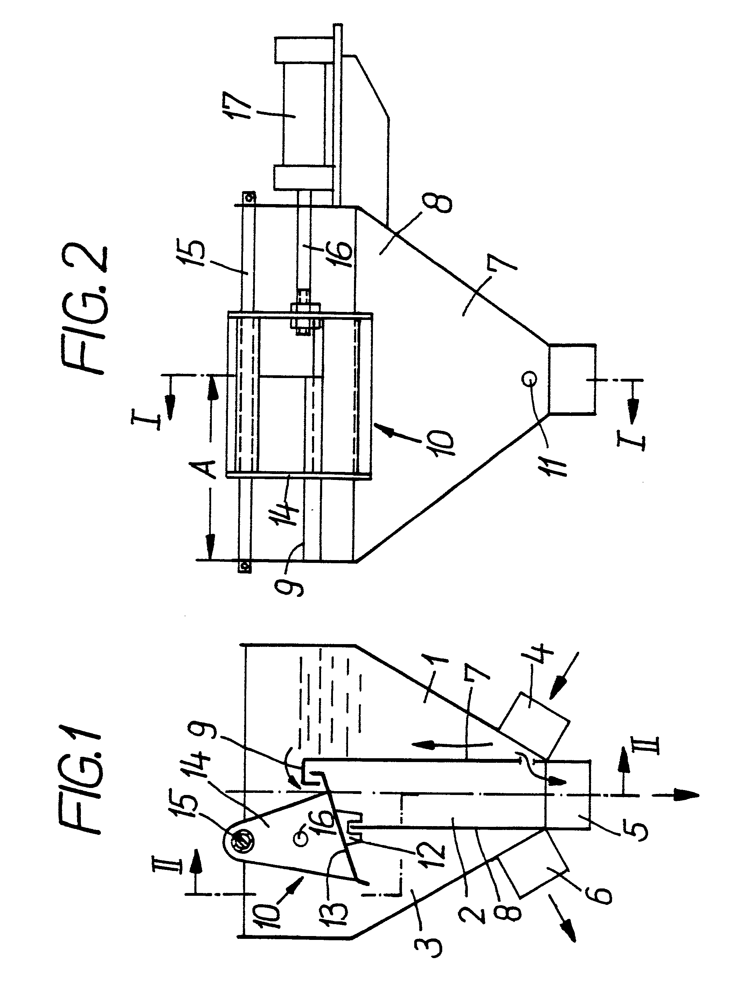

Ein Ausführungsbeispiel des erfindungsgemäßen Kalkmilchzuteilers ist in Fig. 1 und 2 dargestellt und im folgenden näher beschrieben. Es zeigt

Fig. 1 einen Querschnitt entsprechend Linie I-I in Fig. 2,

Fig. 2 einen Längsschnitt entsprechend Linie II-II in Fig. 1.

Der Innenraum des sich nach unten beidseitig verjüngenden Kalkmilchzuteilers ist durch Trennwände 7 und 8 in drei Kammern unterteilt, in eine Zulaufkammer 1, eine Rücklaufkammer 2 und eine Ablaufkammer 3. Ein im wesentlichen konstanter Kalkmilchstrom wird über den Zulauf 4 von der (nicht dargestellten) Behälter-Pumpe zugeführt in die Zulaufkammer 1 bis zur Höhe der Überlaufkante 9. Diese Überlaufkante 9 wird etwa von der Hälfte der Trennwand 7 in dem mit A bezeichneten Überlaufbereich gebildet. Der restliche Teil der Trennwand 7 ragt bis zur Oberkante des Kalkmilchzuteilers.

Im oberen Bereich des Kalkmilchzuteilers ist ein in Längsrichtung beweglicher Dosierschieber 10 angeordnet, er bewegt sich auf einer Stange 15 und wird von einem Führungselement 12 und der Oberkante der Trennwand 8, die tiefer als die Überlaufkante 9 liegt, geführt. Der Dosierschieber greift unter die Überlaufkante 9 und leitet je nach Stellung den ganzen Kalkmilchstrom oder einen Teil davon über seine geneigte Leitfläche 13 über die Rücklaufkammer 2 hinweg in die Ablaufkammer 3. Von dort fließt die für die Saftreinigung benötigte Menge Kalkmilch über den Ablauf 6 ab zur (nicht dargestellten) Saftreinigung. Die eine Seitenwand 14 des Dosierschiebers 10 teilt den zufließenden Kalkmilchstrom. Der überschüssige Kalkmilchanteil fließt seitlich am Dosierschieber 10 vorbei über die Überlaufkante 9 in die Rücklaufkammer 2 und über den Rücklauf 5 ab und zur Behälter-Pumpe zurück (Zirkulation). Zulauf 4, Rücklauf 5 und Ablauf 6 sind jeweils an der tiefsten Stelle der entsprechenden Kammern 1, 2 und 3 angeordnet.

Damit im Falle einer Störung auch die Zulaufkammer 1 in jedem Falle leerlaufen kann, ist durch eine oder mehrere Bohrungen 11 an der tiefsten Stelle der Zulaufkammer 1 eine Verbindung zur Rücklaufkammer 2 angebracht. Durch sie fließt auch im laufenden Betrieb ein kleiner Kalkmilchstrom, so daß ein Zusetzen vermieden wird.

Die Bewegung des Dosierschiebers 10 erfolgt über eine daran befestigte Schub- und Zugstange 16 durch den Stellantrieb 17, z.B. einen Pneumatikzylinder.

Dargestellt und beschrieben ist ein im wesentlichen rechteckiger Kalkmilchzuteiler, die Ausführung kann jedoch je nach den Bedingungen der Anlage oder Fertigungsgegebenheiten auch anders gewählt werden, insbesondere rund mit entsprechend angepaßten Kammern und Dosierschieber.

**Ansprüche**

1. Vorrichtung zum dosierten Zugeben von Kalkmilch für die Saftreinigung, insbesondere bei der Zuckerherstellung, abhängig von der zu behandelnden Saftmenge oder deren pH-Wert, **dadurch gekennzeichnet,** daß ein Innenraum in drei Kammern (1, 2, 3) mit je einem Zu- bzw. Ablauf (4, 5, 6) unterteilt ist, von denen eine als Zulaufkammer eine als Ablaufkammer und eine zwischen diesen beiden liegende als Rücklaufkammer dient, wobei ein Teil der Trennwand (7) zwischen der Zulaufkammer (1) und der Rücklaufkammer (2) eine Überlaufkante (9) bildet, die Oberkante der Trennwand (8) zwischen der Rücklaufkammer (2) und der Ablaufkammer (3) niedriger liegt als die Überlaufkante (9), ein Dosierschieber (10) relativ zur Überlaufkante (9) beweglich derart angeordnet ist, daß er je nach seiner Stellung den über die Überlaufkante (9) tretenden Kalkmilchzulaufstrom ganz oder teilweise in die Ablaufkammer (3) oder teilweise oder ganz in die Rücklaufkammer (2) leitet und daß die Zulaufkammer (1) zusätzlich über eine oder mehrere Bohrungen (11) mit der Rücklaufkammer (2) in Verbindung steht.

2. Vorrichtung nach Anspruch 1, dadurch gekennzeichnet, daß die Kammern im Bereich der Flüssigkeit konisch sind.

3. Vorrichtung nach Anspruch 1 oder 2 dadurch gekennzeichnet, daß der Dosierschieber zwischen der Zulaufkammer (1) und der Ablaufkammer (3) über der Rücklaufkammer (2) diese überbrückend angeordnet ist.

4. Vorrichtung nach einem der Ansprüche 1 bis 3, dadurch gekennzeichnet, daß sowohl der Zulauf (4) als auch der Rücklauf (5) und der Ablauf (6) an der Unterseite der Kammern angeordnet sind.

5. Vorrichtung nach einem der Ansprüche 1 bis 4, dadurch gekennzeichnet, daß der Dosierschieber (10) unter die Überlaufkante (9) greift und den für die Saftreinigung benötigten Kalkmilchanteil über eine durch ihn gebildete geneigte Leitfläche (13) in die Ablaufkammer (3) leitet.

EP 0 294 569 A2

FIG.2

FIG.1